# EUROPEAN PATENT SPECIFICATION

(11) **EP 4 155 064 B1**
(45) Date of publication and mention of the grant of the patent: **24.07.2024**
(21) Application number: 21199497.5
(22) Date of filing: 28.09.2021
(51) Int. Cl.: B29D 99/00, B29C 31/08, B29C 70/38

(54) **A MOULDING ASSEMBLY FOR MANUFACTURING A SHELL PART OF A WIND TURBINE BLADE**
FORMANORDNUNG ZUR HERSTELLUNG EINES SCHALENTEILS EINER WINDTURBINENSCHAUFEL
ENSEMBLE DE MOULAGE POUR LA FABRICATION D'UNE PARTIE DE COQUE DE PALE D'ÉOLIENNE

(43) Date of publication of application: 29.03.2023
(73) Proprietor: LM Wind Power A/S, 6000 Kolding (DK)
(72) Inventor: MADSEN, Kristian Lehmann, 6000 Kolding (DK); BRANDT, Frederik, 6000 Kolding (DK)
(74) Representative: COPA Copenhagen Patents

(56) References cited:
- EP-A1- 3 705 275
- WO-A1-2014/094789

## Description

### Field of the invention

The present invention relates to a moulding assembly for manufacturing a shell part of a wind turbine blade, and to a method of manufacturing a shell part of a wind turbine blade using the moulding assembly.

### Background of the invention

Wind power provides a clean and environmentally friendly source of energy. Wind turbines usually comprise a tower, generator, gearbox, nacelle, and one or more rotor blades, capturing kinetic energy of wind using known airfoil principles. Modern wind turbines may have rotor blades that exceed 90 meters in length.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

The shell halves of rotor blades are usually manufactured using blade moulds. First, a blade gel coat or primer is applied to the mould. Subsequently, fibre reinforcement and/or fabrics are placed into the mould followed by resin infusion. A vacuum is typically used to draw epoxy or polyester resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are assembled by being glued or bolted together substantially along a chord plane of the blade.

The document EP 3 705 275 A1 discloses, for example, a moulding assembly for manufacturing a shell part of a wind turbine blade, the moulding assembly comprising a blade mould for moulding the shell part, the blade mould comprising a moulding cavity, a gripping device for releasably engaging a preform for the shell part,a lifting device, wherein the gripping device is connected to the lifting device, a pivot connector with a proximal end and an opposing distal end, the proximal end of the pivot connector being releasably attachable to the blade mould, and the distal end of the pivot connector being coupled to the gripping device.

In such blade manufacturing processes, the use of preforms becomes increasingly important. A preform is a shaped arrangement of fibres, such as multiple layers thereof, which has been bound and/or consolidated for later use as part of the fibre lay-up in the blade mould. The rationale for using preforms for blade manufacturing is to reduce cycle time in the blade mould. In addition, using preforms may reduce the number of required repairs due to the pre-consolidated structure of the preforms. As blade lengths increase, using preforms for blade lay-up adds efficiency and precision.

A shell of a modern wind turbine blade may comprise different preforms of 20 or more slightly different geometries, which provides certain challenges with regard to transferring the various preforms from their respective preform moulds to the blade mould. Known solutions rely on a plurality of different transfer jigs adapted to the various preform geometries. However, this is often a tedious and costly process. In addition, new modifications will have to be made for each new preform geometries.

Another challenge arises from the fact that a subset of the preforms that are to be arranged in the blade mould need to be arranged in a tilted or even substantially vertical position. This applies in particular to the root region of the blade mould. This involves the risk of undesired preform sliding due to the force of gravity and resulting wrinkle formation or other material defects. Known devices for transferring preforms tend to be quite heavy, and the manoeuvring of such heavy equipment poses a number of work safety risks.

It is therefore a first object of the present invention to provide an efficient and safe method of arranging preforms for a wind turbine blade shell part in the blade mould.

It is a further object of the present invention to provide flexible and safe tools or assemblies for such methods.

It is another object of the present invention to provide an improved method of manufacturing a wind turbine blade using multiple preforms which are to be arranged at different locations within the blade mould.

### Summary of the invention

The present invention addresses one or more of the above-discussed objects by providing a moulding assembly for manufacturing a shell part of a wind turbine blade, the moulding assembly comprising a blade mould for moulding the shell part, the blade mould comprising a moulding cavity, a gripping device for releasably engaging a preform for the shell part, a lifting device, wherein the gripping device is connected to the lifting device, a tensionable member with a proximal end and an opposing distal end, the proximal end of the tensionable member being releasably attachable to the blade mould, and the distal end of the tensionable member being coupled to the gripping device, and a tensioning unit engaged to the tensionable member for creating and maintaining tension on the tensionable member.

The moulding assembly of the present invention is found to allow for an efficient and accurate arrangement of preforms within the moulding cavity of the blade mould. This applies in particular to the root region of the blade mould, in which preforms may have to be precisely arranged in inclined or even substantially vertical positions. It was found that the combination of a tensionable member, such as a strap or a wire, with a tensioning unit for creating and maintaining tension on the tensionable member allows for a safer and more precise control during preform placement in the blade mould. As compared to rigid arrangements, the tensionable member can be designed lighter, allowing for easier installation and safer manoeuvring.

In addition, it was found that this arrangement can ensure that the preform does not slide down within the moulding cavity, for example along an angled surface, during preform placement. Also a more precise control of the movement of the gripping device is enabled by the present invention.

The blade mould is typically a blade mould for a shell half of a wind turbine blade, such as a pressure side shell half or a suction side shell half. Thus, the shell part is preferably a shell half of a blade, such as a downwind shell half or an upwind shell half. The shell part can be a suction side shell half or a pressure side shell half. In some embodiments, the method of manufacturing a shell part according to the present invention may involve arranging preforms in a prefab mould with subsequent infusing of resin and curing for manufacturing sub parts for later blade assembly. In some embodiments, the shell part is a root laminate, a main laminate or a part thereof. In another embodiment, the shell part is a blade half. In other embodiments, the shell part is a full blade.

Preferably, the preform to be used in the present methods is a consolidated arrangement of material comprising fibres, such as glass fibres, and a binding agent. The preform will typically be used for manufacturing a blade half of a wind turbine blade. The manufactured preforms can be used in a blade moulding process as part of the fibre lay-up in the blade mould. The preforms used according to the present invention can be placed within the root region of a blade mould, thus constituting part of the root laminate. The root region may correspond to a region of the blade having a substantially circular or elliptical cross-section. However, the preforms could also be used for other parts and regions of a wind turbine blade, such as trailing edge or leading-edge reinforcements or adhesive flanges. Alternatively, the preforms could be used for a full blade layup.

The gripping device for releasably engaging a preform for the shell part of the present invention preferably comprises one or more needle grippers for engaging and releasing the preform. The gripping device may comprise a support frame to which the respective load engaging members, such as hooks or attachment eyes, of the first and second hoisting devices of the lifting device may be attached.

The proximal end of the tensionable member, which may be formed as a hook, can be releasably attached to the blade mould, preferably to an edge or a side surface of the blade mould, such as a front edge or a root end edge of the blade mould. The proximal end of the tensionable member can be a free end. The opposing distal end of the tensionable member is preferably coupled to the gripping device via a winding mechanism mounted on the gripping device. In some embodiments, the tensionable member and the tensioning unit are part of a winch which is mounted on the gripping device. Thus, for creating and maintaining tension on the tensionable member, such as a rope or strap, a rotating drum of the winch may be brought into a rotation to create a winding motion.

In a preferred embodiment, the tensionable member is attached between the blade mould and the gripping device such that it connects the blade mould and the gripping device. The tensionable member usually has a slack state and a taut state, wherein the tensioning unit is configured to cause the tensionable member to switch from a slack state to a taut state. In a preferred embodiment, the tensionable member is a strap. In another embodiment, the tensionable member is a cable. In another embodiment, the tensionable member is a wire. In another embodiment, the tensionable member is a rope. Preferably, the tensionable member interconnects the gripping device and the blade mould.

The tensioning unit is engaged to the tensionable member for creating and maintaining tension on the tensionable member preferably when the proximal end of the tensionable member is attached to the blade mould. In a preferred embodiment, the tensioning unit comprises a winding mechanism, preferably comprising a winding member such as a reel, a roller or a rotating drum, which can be rotated by a crank or a motor. The winding member is preferably coupled to a rotary driving source, such as a drive motor. Thus, in a preferred embodiment, the tensioning unit comprises a drive motor, such as an electric motor, coupled to said winding mechanism. Preferably, the tensioning unit is part of a winch.

In a preferred embodiment, the winding mechanism may comprise one or more gears to translate the rotational force provided by the motor to the winding member, such as a reel, roller or a rotating drum.

In an advantageous embodiment, the tensioning unit comprises a ratcheting mechanism, such as a ratchet wrench, to maintain tension on the tensionable member. The ratcheting mechanism may be part of, or integrated with, the winding mechanism.

It is preferred that the proximal end of the tensionable member comprises an attachment device, such as a hook, for attachment to an edge of the blade mould. In some embodiments, the proximal end of the tensionable member may be connected to, or formed as, a hook, such as a winch hook. In some embodiments, the proximal end of the tensionable member is coupled to the blade mould via an attachment eye, a loop or a hook. For example, a hook may be fastened to the proximal end of the tensionable member. The blade mould may comprise a predefined attachment point, such as a loop or a pin, for receiving the proximal end of the tensionable member, such as a hook of the tensionable member.

In a preferred embodiment, the tensioning unit is mounted on the gripping device, wherein the distal end of the tensionable member is coupled to the gripping device via the tensioning unit. In a preferred embodiment, the proximal end of the tensionable member is attached to the blade mould.

In some embodiments, the moulding assembly comprises two tensionable members, each with a proximal end and an opposing distal end, wherein the proximal end of the first tensionable member is releasably attached to the blade mould at a first end of the blade mould, such as a leading edge end or edge of the blade mould, and wherein the proximal end of the second tensionable member is releasably attached to the blade mould at a second end of the blade mould, such as a trailing edge end or edge of the blade mould, and the respective distal ends of the tensionable member each being coupled to the gripping device, wherein a tensioning unit, or two respective tensioning units, are engaged to the respective tensionable members for creating and maintaining tension on the tensionable members. This embodiment may be used to further control the movement of the gripping device during preform placement.

In a preferred embodiment, the moulding assembly comprises two tensionable members, each with a proximal end and an opposing distal end, wherein the proximal end of the first tensionable member is releasably attached to the blade mould at a first end of the blade mould, such as a root end of the blade mould, and wherein the proximal end of the second tensionable member is releasably attached to the blade mould at a second end of the blade mould, such as a tip end of the blade mould, wherein the respective distal ends of the tensionable members are coupled to the gripping device at opposing ends thereof, wherein respective tensioning units are engaged to the respective tensionable members for creating and maintaining tension on the respective tensionable members. Such arrangement is found to facilitate a more controlled preform placement, in particular for preventing undesired rotation of the gripping device. This may be particularly advantageous when the respective load engaging members, for example each of the lower hooks, are connected to the gripping device at respective points closer to the mid-section of the gripping device, e.g. at quarter points.

In a preferred embodiment, the lifting device comprises a first hoisting device and a second hoisting device, each of the first and second hoisting devices comprising a respective load engaging member for connecting the first and the second hoisting devices to the gripping device, and wherein the gripping device is connected to the lifting device at the respective load engaging members of the first and second hoisting devices, such that the load engaging members are spaced apart from another.

The lifting device preferably comprises a holder, such as an upper hook, which can be suspended from scaffolding, a gantry or a crane. In a preferred embodiment, the lifting device comprises a dual chain hoist, wherein each chain hoist constitutes a respective hoisting device. Thus, each of the first and second hoisting devices is preferably a chain hoist. Each of the first and second hoisting devices may comprise a load chain and a lifting chain wheel, wherein the respective load engaging members are preferably arranged at the respective free ends of the load chain. Each of the load engaging members may take the form of a hook or an attachment eye, or similar fastening means, for engaging the gripping device. In a preferred embodiment, the gripping device comprises a base frame, wherein the load engaging members engage the base frame of the gripping device.

In other embodiments, each of the first and second hoisting device is a power-operated hoist driven by a common or separate driving motor(s), such as an electric motor. In some embodiments, each of the hoisting devices comprises a differential pulley.

The gripping device is preferably connected to the lifting device at the respective load engaging members of the first and second hoisting devices, such that the load engaging members are spaced apart from another when connected to the gripping device. This is typically implemented in that the respective load engaging members, such as hooks or attachment eyes, are connected at different locations of the gripping device, such as at different locations along a base frame of the gripping device. It is preferred that each of the respective load engaging members, for example each of the lower hooks, are connected at opposing sides of the gripping device, e.g. at a left and right side of a support frame of the gripping device. In other embodiments, each of the respective load engaging members, for example each of the lower hooks, are connected at opposing corners or opposing edges of the gripping device, for example at opposing corners or opposing edges of a support frame or base frame of the gripping device. Advantageously, the load engaging members are spaced apart from another when connected to the gripping device such that tilting of the gripping device is conveniently enabled by using the lifting device. Thus, the gripping device can be advantageously tilted using the lifting device with the respective hoisting devices, leading to improved accuracy when arranging the preforms in the blade mould.

In a preferred embodiment, the respective load engaging members of the first and second hoisting devices are spaced apart from another when connected to the gripping device by a linear distance of at least 0.5 m, more preferably at least 1 m, most preferably at least 2 m.

In some embodiments, the moulding assembly of the present invention allows for tilting the gripping device such that a plane of the engaged preform, or a tangent to the curved lower surface of the preform, forms an angle with the ground surface of at least 45 degrees, preferably at least 60 degrees, such as at least 85 degrees.

In a preferred embodiment, the first hoisting device is independently operable from the second hoisting device. Thus, tilting of the gripping device can be achieved by lowering the load engaging member of one hoisting device to a greater or lesser extent than the load engaging member of the other hoisting device.

In a preferred embodiment, respective load engaging members of the first and second hoisting devices are connected at opposing ends of the gripping device, such as at opposing sides, opposing edges or opposing corners of the gripping device, such as at opposing sides, opposing edges or opposing corners of a base frame of the gripping device. This provides an advantageous degree of tilting capability of the gripping device during preform arrangement in the blade mould.

In a preferred embodiment, the first hoisting device and/or the second hoisting device comprises a chain hoist with a load chain, the respective load engaging member being located at the free end of the load chain. The respective load engaging member may take the form of a hook or an attachment eye, or other fastening means suitable for engaging the gripping device.

In a preferred embodiment, the lifting device comprises a dual chain hoist arrangement comprising a first chain wheel which is part of the first hoisting device, and a second chain wheel which is part of the second hoisting device. In a preferred embodiment, each hoisting device comprises a cable or a chain, wherein the load engaging member is arranged at the distal end, i.e. at the free end, of the cable or chain. It is preferred that the lifting device is suspended from a gantry or crane arranged above the blade mould.

In a preferred embodiment, the gripping device comprises a base frame, a plurality of arms slidably mounted on the base frame, each arm having a proximal end and a distal end, a plurality of gripping members for gripping a top surface of the preform, each gripping member being attached to the distal end of at least one of the arms, a plurality of lock members, each lock member being engaged with at least one of the arms for allowing sliding motion of the arm relative to the base frame in a first direction while preventing sliding motion of the arm relative to the base frame in a second direction.

This arrangement of the gripping device is found to be flexible and efficient in catering to various preform geometries, while not relying on complex control systems or computer-generated adaptions. Thus, a single gripping device can be used for gripping and transferring preforms of different shape and curvature as the gripping arms are slidable relative to the base frame in a first direct direction, preferably an upward direction. Since sliding motion of the gripping arms relative to the base frame in a second, preferably a downward direction, is prevented, the positions of the individual gripping arms relative to the base frame can be conserved for the next transfer of a preform of the same shape.

Such gripping device is useful for lifting a preform for a wind turbine blade from its preform mould and for transferring said preform to the blade mould. The base frame preferably comprises a plurality of vertically extending beams and a plurality of horizontally extending beams, such as steel beams. The horizontally extending beams may include longitudinally oriented beams and transversely oriented beams which extend substantially perpendicular to the longitudinally oriented beams.

In a preferred embodiment, the gripping device comprises a plurality of gripping arms slidably, preferably vertically slidably, mounted on the base frame, either directly or via one more support members or fixtures, such as one or more horizontally extending support members. Preferably, each gripping arm is slidable in a vertical direction, such as in an upward direction. Each gripping arm has a proximal end, which during operation is at the top of the device, i.e. nearest to the ceiling, and a distal end, which during operation is at the bottom of the device, i.e. nearest to the floor or to the preform top surface.

A gripping member is preferably attached to the distal end of a gripping arm, wherein the gripping member is suitable for gripping, i.e. attaching itself to, a top surface of the preform. A lock member is engaged with the gripping arm for allowing sliding motion of the gripping arm relative to the base frame in a first direction, preferably in an upward direction, while preventing sliding motion of the gripping arm relative to the base frame in a second direction, preferably in a downward direction. Thus, in a preferred embodiment, the first direction is an upward direction and the second direction is a downward direction.

Preferably, the lock member comprises, or consists of, a ratchet or a brake member. The lock member is advantageously arranged to prevent linear movement of the gripping arm in one direction and to allow linear movement of the gripping arm in the opposite direction relative to the base frame.

In some embodiments, each gripping arm is individually slidable relative to the base frame. This ensures that even complex top surfaces or shapes of a preform can be accurately engaged by each of the gripping arms carrying the respective gripping members. Such individual arrangement of the vertical position of each gripping arm relative to the base frame provides an elegant shape memory solution, ensuring that preforms of the same shape can be transferred from their respective preform moulds without altering the respective gripping arm positions and without any need to control the same through complex control units or computational means.

In some embodiments, the gripping device comprises at least three gripping arms, such as at least five gripping arms, with respective gripping members being attached to the distal end of the respective gripping arms. In some embodiments, the gripping device comprises between 8 and 400, more preferably 10-300 gripping arms, most preferably 100-200 gripping arms, with respective gripping members being attached to the distal end of the respective gripping arms.

In a preferred embodiment, the gripping device may be provided as a modular system, wherein the base frame is created from a plurality of equal modules and wherein all gripping arms are alike.

According to another embodiment, each gripping arm is slidably mounted within a slot arranged on the base frame. The slot may be provided by a fixture or bracket attached to the base frame, for example, via a horizontally extending support member or bar. Preferably, the gripping arm may slide upward within the slot, while downward movement is prevented.

In a preferred embodiment, sliding motion of the gripping arms relative to the base frame is achieved exclusively by gravity. Once a gripping arm has engaged the preform top surface via its gripping member, the gripping arm will preferably slide upward relative to the base frame when lowering the latter. In other words, sliding motion of the gripping arms relative to the base frame is preferably achieved by lowering the base frame while one or more of the gripping arms are engaged with, or pushed back by, the preform top surface. Thus, no actuation means other than a crane or lifting device suspending the gripping device is needed to achieve relative movement of the gripping arms in relation to the base frame. Thus, preferably, the positions of the gripping arms relative to the base frame is set/defined by the top surface geometry of the preform.

It is preferred that the vertical positions of the gripping arms relative to the base frame are not controlled by a computer or a control unit. The gripping device of the present invention thus provides a simple, yet efficient solution for custom-tailoring the gripping device to virtually all possible preform geometries.

In an alternative embodiment, the gripping arms are actuated by one or more pistons, such as pneumatic pistons, wherein the lock members comprise at least one valve for preventing sliding motion of the gripping arm relative to the base frame in a second direction.

In some embodiments, a programmable logic controller may be used to control whether the pistons should be in an entirely retracted or in an entirely extending position. Also, pistons can be used to create a threshold on the needle gripper while injecting the needles.

It is preferred that the gripping member is a needle gripper, such as a pneumatic needle gripper. The needle gripper preferably comprises a plurality of gripping needles which can be retracted into and extended from a gripper base part or a gripper housing. The gripping member is advantageously suitable for gripping a preform comprising a fabric, one or more fibre materials, and/or other materials that can be penetrated by needles. Useful needle grippers are disclosed in US 2016/0257509 A1 and US 8,104,807 B2.

In another embodiment, the gripping member comprises a vacuum cup. In some embodiments, some of the gripping members are needle grippers, and some of the gripping members are vacuum cups.

In some embodiments, the gripping member releasably attaches to the preform upon contact with the top surface of the preform. Preferably, one or more needles of the gripping member penetrate the preform or a layer thereof.

Preferably, each gripping arm is slidably arranged in a bracket or fixture mounted on the base frame. In one embodiment, the bracket or fixture comprises the lock member.

In another aspect, the present invention relates to a method of manufacturing a shell part of a wind turbine blade using the moulding assembly according to the present invention, the method comprising engaging a preform for the shell part with the gripping device, arranging the engaged preform within the moulding cavity of the blade mould by moving the gripping device and the engaged preform by means of the lifting device, and disengaging the preform from the gripping device, wherein the step of arranging the engaged preform within the moulding cavity comprises attaching the proximal end of the tensionable member to the blade mould, and subsequently creating tension on the tensionable member by using the tensioning unit.

In a particularly preferred embodiment, the step of arranging the engaged preform within the moulding cavity of the blade mould further includes pulling the gripping device and the attached preform towards the moulding cavity using the tensionable member and the tensioning unit.

In some embodiments, the moulding assembly comprises two tensionable members, each with a proximal end and an opposing distal end, wherein the proximal end of the first tensionable member is releasably attached to the blade mould at a first end of the blade mould, such as a leading edge end or edge of the blade mould, and wherein the proximal end of the second tensionable member is releasably attached to the blade mould at a second end of the blade mould, such as a trailing edge end or edge of the blade mould, and the respective distal ends of the tensionable member each being coupled to the gripping device, wherein a tensioning unit, or two respective tensioning units, are engaged to the respective tensionable members for creating and maintaining tension on the tensionable members. In such embodiments, the step of arranging the engaged preform within the moulding cavity may comprise attaching the proximal end of each tensionable member to opposing ends, or edges, of the blade mould, and subsequently creating tension on both tensionable members by using the tensioning unit(s). Such embodiments can be used to further minimize undesired movement of the preform during placement, thus achieving an improved level of control.

In a preferred embodiment, the step of arranging the engaged preform within the moulding cavity of the blade mould includes tilting the gripping device by means of the lifting device comprising the first hoisting device and the second hoisting device.

In a preferred embodiment, the preform is manufactured in a preform mould, prior to engaging the preform with the gripping device, wherein the method further comprises a step of transferring the engaged preform to the blade mould using the lifting device and the connected gripping device, prior to arranging the engaged preform within the moulding cavity of the blade mould.

In a preferred embodiment, the method further comprises the steps of infusing resin into the blade mould after disengaging the preform from the gripping device, and curing or hardening the resin in order to form the blade part.

Typically, the resin infusion step comprises vacuum assisted resin transfer moulding. In a preferred embodiment, the resin dissolves the binding agent of the preform. Other embodiments involve chemical binding, for example for epoxy or thermoset resins. The resin for injecting the preform during the manufacturing of wind turbine blade parts, such as a root laminate, may be an epoxy, a polyester, a vinyl ester or another suitable thermoplastic or duroplastic material. In other embodiments, the resin may be a thermosetting resin, such as epoxy, vinyl ester or polyester, or a thermoplastic resin, such as nylon, PVC, ABS, polypropylene or polyethylene.

It is preferred that the step of arranging the engaged preform within the moulding cavity of the blade mould includes tilting or turning the gripping device by means of the lifting device comprising the first hoisting device and the second hoisting device.

In a preferred embodiment, the preform is manufactured in a preform mould, prior to engaging the preform with the gripping device, wherein the method further comprises the step of transferring the engaged preform to the blade mould using the lifting device prior to arranging the engaged preform within the moulding cavity of the blade mould.

In a preferred embodiment, each of the preforms is configured to form a blade section starting from the root end of the wind turbine blade. Thus, preferably each of the preforms is configured to be arranged at the root end of the blade mould. Most preferably, the preform is configured to form a subsection of the root section extending from the root end of the blade together with other subsections of the root section equally extending from the root end of the blade. In some embodiments, the preform mould comprises a moulding surface configured for the manufacturing of respective subsections of a wind turbine blade, each subsection extending from the root end of the wind turbine blade. In some embodiments, the preform mould has a concave, or inwardly curved, moulding surface.

The method of manufacturing a shell part of the present invention will usually comprise laying up additional material, such as fibre material, in the blade mould together with the preform(s). The preform will typically include fibre material and a binding agent to form the preform. Preferably, the fibre material and the binding agent are heated using one or more heating devices, such as an oven. Preferably, a binding agent is added to the fibres prior to the heating step. Such binding agent is preferably present in an amount of 0.1-15 wt% relative to the weight of the fibre material. The binding agent may also be present in an amount of 10-20 gram per square meter of glass surface. The fibre material may include fibre rovings, such as glass fibre rovings. The binding agent of the preform can be added simultaneously with the fibres or subsequently to fibre lay-up. The binding agent is preferably present in an amount of 0.1-15 wt% relative to the weight of the fibre material. The binding agent may also be present in an amount of 5-40, preferably 10-20, gram per square meter of glass surface. In preferred embodiments, the binding agent is present in an amount of 0.5-5 wt%, preferably 0.5-2.5 wt%, relative to the weight of the fibre material. Advantageously, the binding agent is a thermoplastic binding agent. The binding agent may comprise a polyester, preferably a bisphenolic polyester.

In a preferred embodiment, the heating of the fibre material and the binding agent to form the preform takes place at a temperature of between 40 and 160°C, preferably between 90 and 160 °C. An example of a suitable binding agent for the preform is a polyester marketed under the name NEOXIL 940. Examples include NEOXIL 940 PMX, NEOXIL 940 KS 1 and NEOXIL 940 HF 2B, all manufactured by DSM Composite Resins AG. Another example is a polyester resin marketed under the name C.O.I.M. FILCO^{®} 661 FPG 005, which is a bisphenolic unsaturated polyester resin in powder form. Preferably, the binding agent is a polyester, preferably a bisphenolic polyester. In other embodiments, the binding agent is a hotmelt adhesive or based on a prepreg resin.

According to another embodiment, the binding agent is a thermoplastic binding agent. Typically, the fibre rovings are at least partially joined together by means of the binding agent by thermal bonding. In a preferred embodiment, the binding agent is a binding powder, such as a thermoplastic binding powder. In one embodiment, the preforms of the present invention essentially consist of the fibre material and the binding agent. This means that the preforms contain no more than 10 wt%, preferably not more than 5 wt% or not more than 1 wt%, of material other than fibre material and binding agent relative to the total weight of the preform. According to another embodiment, the preform consists of the fibre material and the binding agent.

In another embodiment, the fibre material used for the preforms of the present invention essentially consists of glass fibres. This means that the fibre material contains not more than 10 wt%, preferably not more than 5 wt% or not more than 1 wt%, of material other than glass fibres relative to the total weight of the fibre material. According to another embodiment, the fibre material consists of glass fibres.

In one embodiment, the binding agent is present in an amount of 1-6 wt% relative to the weight of the fibre material. According to another embodiment, the melting point of the binding agent is between 40° and 220 °C, preferably between 40 and 160 °C. According to another embodiment, the binding agent comprises a polyester, preferably a bisphenolic polyester. In one embodiment of the present invention, each preform essentially consists of the fibre material and the binding agent. According to another embodiment, the fibre material comprises fibre rovings, preferably glass fibre rovings. In other embodiments, the fibre material may comprise carbon fibres or a hybrid material. According to another embodiment, the fibre material comprises a fibre fabric, such as a fibre mat. In another embodiment, a preform may further comprise at least one fibre fabric such as a fibre mat. Fibre rovings may be arranged on top and/or below such fabric.

In a preferred embodiment, the preforms used in the afore-mentioned methods are used as part of the root region of a wind turbine blade, such as the root laminate. The root region may extend up to 40 meters, such as up to 25 meters, from the root end of the blade, as seen in its longitudinal direction. In other embodiments, the root region may extend to the shoulder of the blade +/- 5 meters. However, the preforms could also be used for other parts and regions of a wind turbine blade. In other embodiments, the preforms manufactured according to the afore-mentioned method are used over a length of 10-35% of the total blade length. In another embodiment, the preforms manufactured according to the afore-mentioned method are used in a region of the blade extending between its root end and a shoulder of the blade.

4:1. In other embodiments, the preform mould has a length-width ratio of at least 5:1, such as at least 10:1. In a preferred embodiment, the preform mould has a length-width ratio of at least 15:1.

The present invention also relates to a blade part, such as a blade half, or to a wind turbine blade, obtainable by the method of the present invention.

In another aspect, the present invention relates to a lifting assembly comprising a gripping device for releasably engaging a preform for a wind turbine shell part, a lifting device, wherein the gripping device is connected to the lifting device, a tensionable member with a proximal end and an opposing distal end, the distal end of the tensionable member being coupled to the gripping device, and a tensioning unit engaged to the tensionable member for creating and maintaining tension on the tensionable member.

It will be understood that any of the above-described features or embodiments to each of the different aspects of the present invention, such as the moulding assembly, the lifting assembly, or the methods of the present invention. In particular, features and embodiments described with regard to the moulding assembly may also apply to the method of the present invention, and vice versa.

As used herein, the term "tensionable" member means a member, such as a rope or a strap, which can have a slack state and a taut state. The term slack means any condition of the tensionable member that is nonlinear.

As used herein, the term "wt%" means weight percent. The term "relative to the weight of the fibre material" means a percentage that is calculated by dividing the weight of an agent, such as a binding agent, by the weight of the fibre material. As an example, a value of 1 wt% relative to the weight of the fibre material corresponds to 10 g of binding agent per kilogram of fibre material.

As used herein, the term "horizontal" means that the direction of movement is generally parallel with respect to the ground. As used herein, the terms "vertical", "downwardly" and "upwardly" refer to directions of movement which is generally perpendicular with respect to the ground.

### Detailed description of the Invention

The invention is explained in detail below with reference to embodiments shown in the drawings, in which corresponding components are identified by the same reference numerals, wherein
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a perspective drawing of a blade mould for producing a wind turbine shell part according to the present invention,
Fig. 6 is a perspective drawing of a base frame of a gripping device for use in the present invention,
Fig. 7 is a perspective drawing of a gripping device for use in the present invention,
Fig. 8 is an enlarged perspective view of a gripping member and a lock member for use in the present invention,
Fig. 9 is a perspective view of a socket arrangement for mounting on a blade mould,
Fig. 10 is a schematic view of different steps of a method of transferring a preform for a wind turbine blade,
Fig. 11 is a schematic side view of a moulding assembly,
Fig. 12 is a schematic side view of a moulding assembly according to the present invention, seen in a first position,
Fig. 13 is a schematic side view of a moulding assembly according to the present invention, seen in a second position,
Fig. 14 is a schematic side view of a moulding assembly according to the present invention, seen in a third position,
Fig. 15 is a schematic side view of moulding assembly according to another embodiment of the present invention, and
Fig. 16 is a schematic perspective view of moulding assembly according to another embodiment of the present invention.

### Detailed description

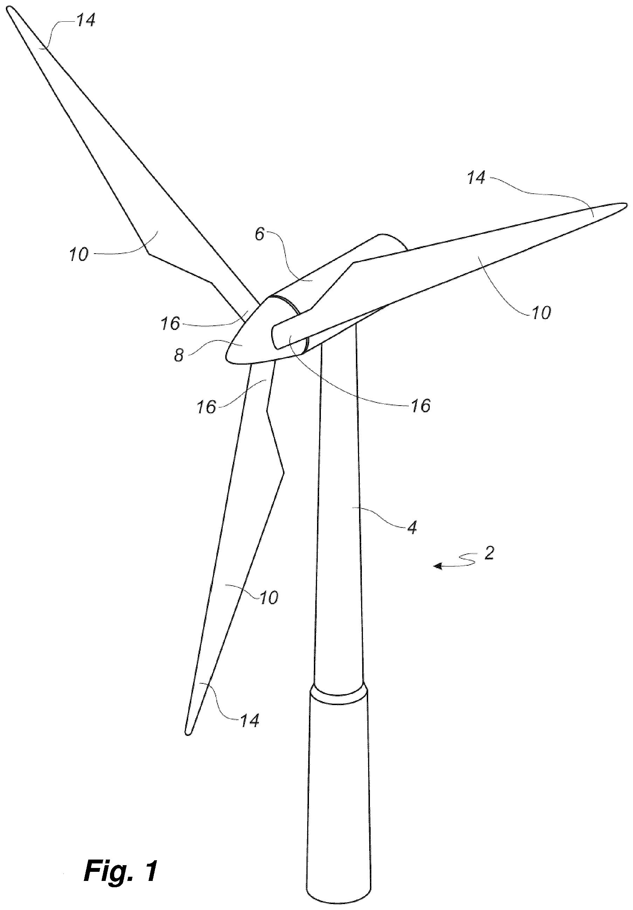

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

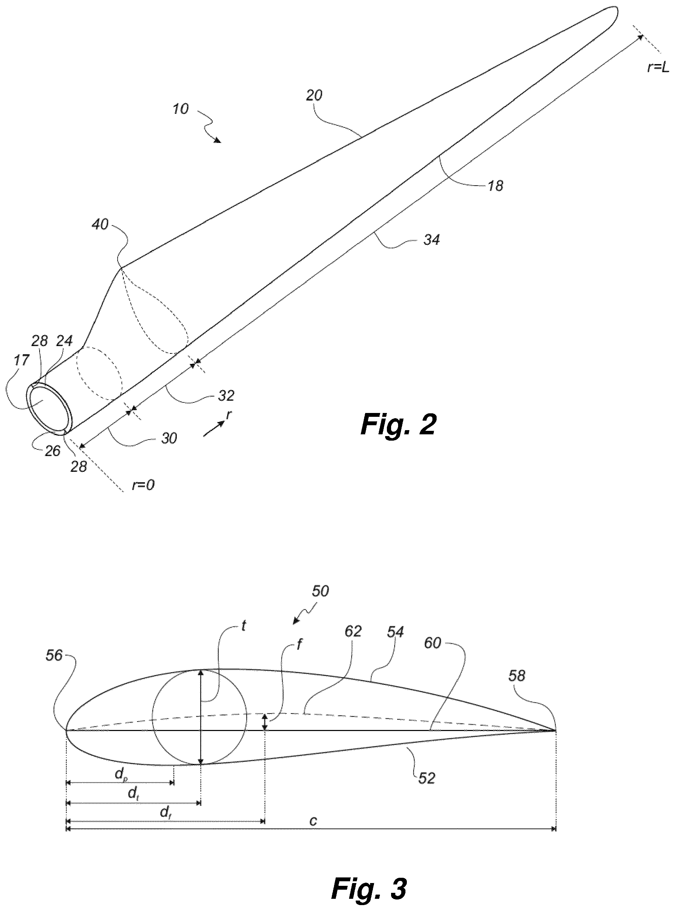

Fig. 2 shows a schematic view of a first embodiment of a wind turbine blade 10. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

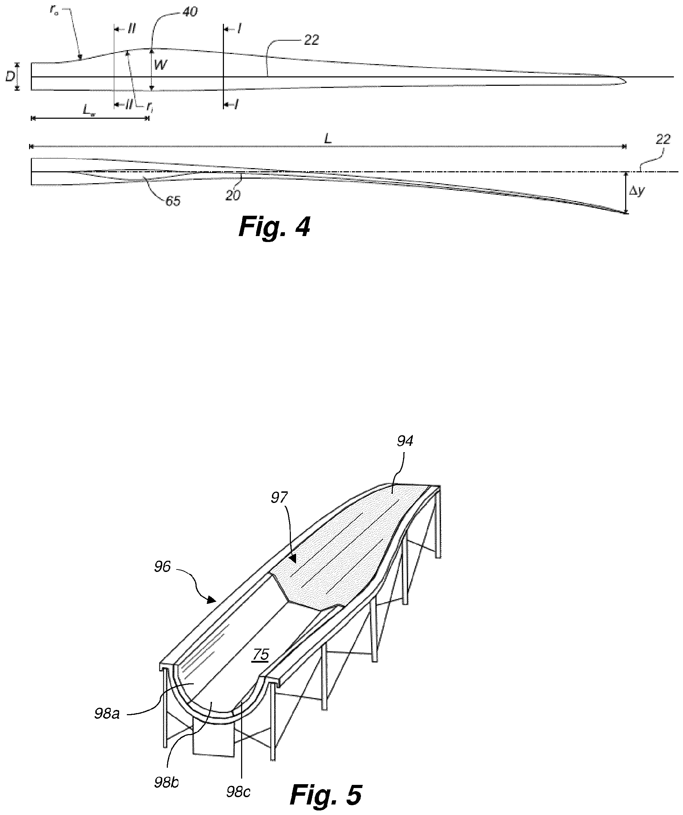

Figs. 3 and 4 depict parameters which are used to explain the geometry of the wind turbine blade. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length *c* extending between a leading edge 56 and a trailing edge 58 of the blade. The airfoil 50 has a thickness *t*, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c,* the maximum camber *f,* the position *d_{f}* of the maximum camber *f,* the maximum airfoil thickness *t,* which is the largest diameter of the inscribed circles along the median camber line 62, the position *dₜ* of the maximum thickness *t,* and a nose radius (not shown). These parameters are typically defined as ratios to the chord length *c.* Thus, a local relative blade thickness *t*/*c* is given as the ratio between the local maximum thickness *t* and the local chord length *c.* Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position *r* = 0, and the tip end located at *r* = *L.* The shoulder 40 of the blade is located at a position *r* = *L_{w}*, and has a shoulder width *W,* which equals the chord length at the shoulder 40. The diameter of the root is defined as D. The curvature of the trailing edge of the blade in the transition region may be defined by two parameters, viz. a minimum outer curvature radius *r*ₒ and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy*, which corresponds to the out of plane deflection from a pitch axis 22 of the blade.

As illustrated in Fig. 5, a manufacturing process for manufacturing a blade part, such as a blade half, may involve laying a number of preforms 98a, 98b, 98c in a blade mould 96. For example, the preforms 98a, 98b, 98c are used for a blade section starting from the root end of the blade, such as the root region. The preforms 98a, 98b, 98c are arranged in the moulding cavity 97, usually together with additional fibre material 94. Then, resin is infused to the moulding cavity 97, which is subsequently cured or hardened in order to form the blade part, such as a blade half.

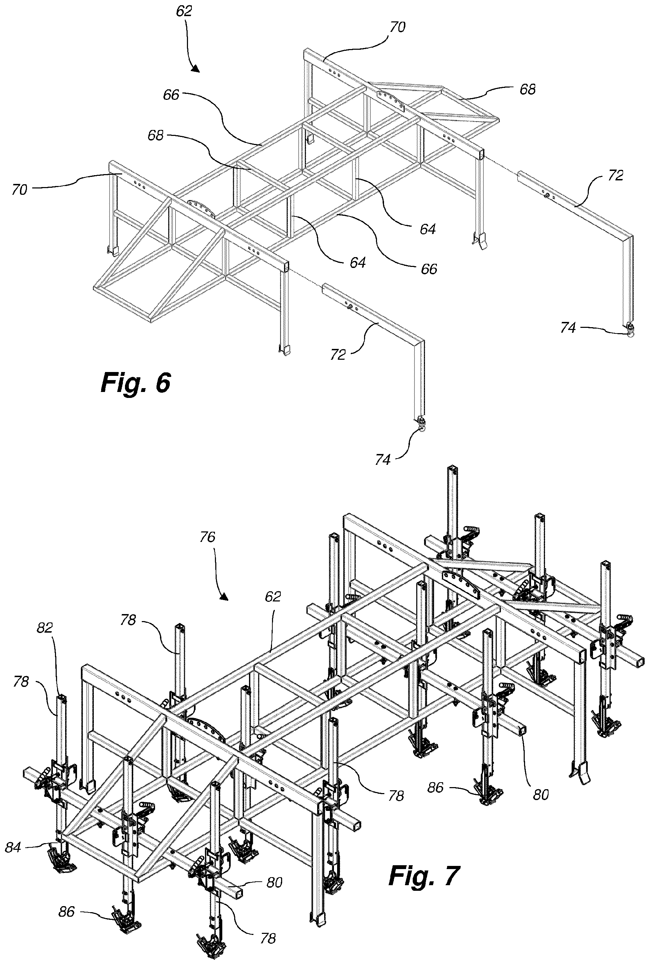

Fig. 6 illustrates a base frame 62 for a gripping device suitable for use in the present invention. The base frame 62 may advantageously be suspended from a lifting device such as a crane or a hoist (not shown). The base frame of Fig. 6 comprises a plurality of vertically extending beams 64, a plurality of horizontally extending beams 66 in the longitudinal direction of the base frame 62, and a plurality of horizontally extending beams 68 in the transverse direction of the base frame 62.

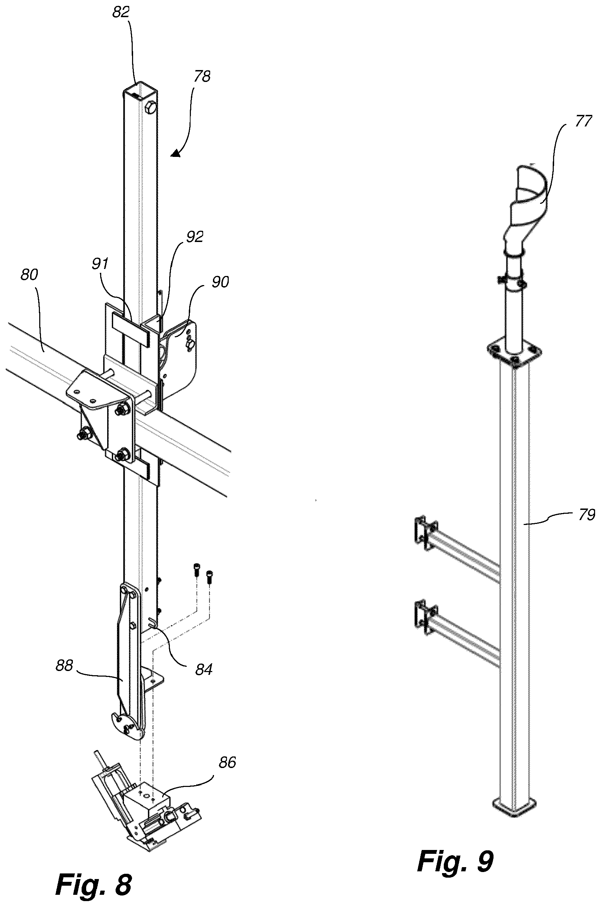

Two horizontally extending sheath members 70 are arranged to receive respective angled support members 72, each support member 72 carrying a pivot connector 74 in the form of a ball member at its distal end. The pivot connector 74 is adapted for being received in a socket member 77 attached to a wind turbine blade mould of the type illustrated in Fig. 9. The socket member 77 may be affixed to a pole member 79 for attachment to a blade mould. Thus, when the preform held by the gripping device is suspended above a blade mould, one or more of the pivot connectors 74 may be received in one or more socket members 77 attached to the blade mould, such that the perform can be pivoted (turned) by simply lowering the same with a crane, without the need for further turning devices.

Fig. 7 illustrates an embodiment of a gripping device 76 for use in the present invention. The gripping device 76 comprises a base frame 62 of the type illustrated in Fig. 6 and a plurality of gripping arms 78 slidably mounted on the base frame 62. The gripping arms 78 may be mounted to the base frame 62 via one or more horizontally extending transverse support members 80. Alternatively, the gripping arms could be mounted directly on the frame 62, for example on the horizontally extending beams 68 in the transverse direction of the base frame 62.

Each gripping arm 78 has a proximal end 82 and a distal end 84, as also seen in the enlarged with of Fig. 8. The gripping device 76 further comprises a plurality of gripping members 86, such as needle grippers, for gripping a top surface of the preform, each gripping member being attached to the distal end 84 of at least one of the gripping arms 78, either directly or via a connection member 88. The needle gripper 86 preferably releasably attaches to the preform upon contact with the top surface of the preform.

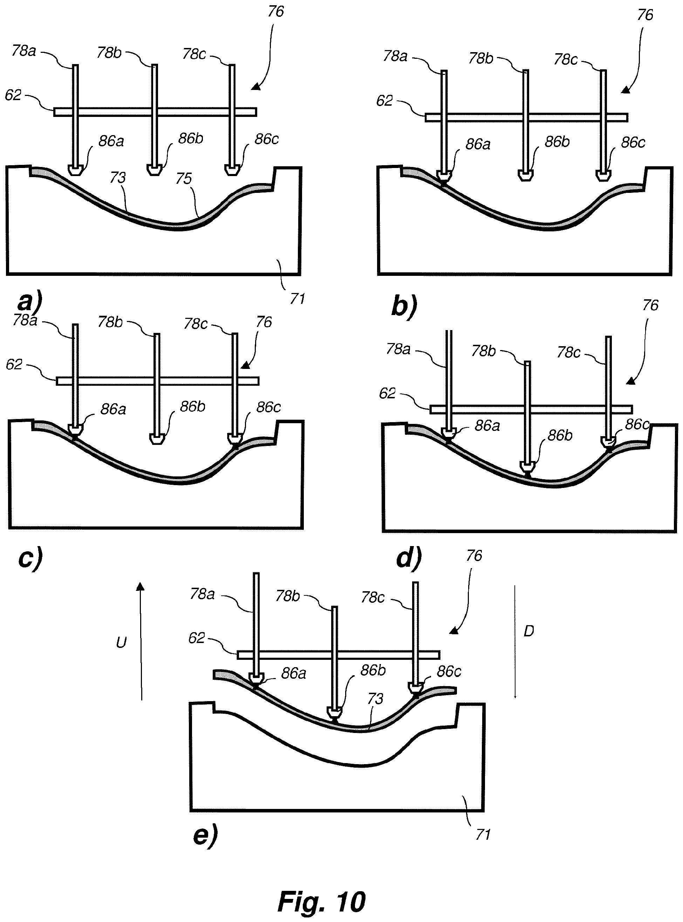

Each gripping arm 78 also comprises a lock member 90, each lock member 90 for allowing sliding motion of the gripping arm 78 relative to the base frame 62 in an upward direction while preventing sliding motion of the gripping arm relative to the base frame in a downward direction. The lock member 90 may comprise a ratchet or a brake system. As best seen in Figure 10, each gripping arm 78 is individually slidable relative to the base frame 62. Each gripping arm 78 may be slidably mounted within a slot 91 of a fixture 92 arranged on the base frame 62.

Fig. 10 illustrates a method of transferring a preform 73 for a wind turbine blade. The method comprises suspending a gripping device 76 over the preform 73, for example using the lifting device. In the illustrated embodiment the preform is manufactured in a preform mould 71 and is to be transferred to a blade mould for producing a shell half of a wind turbine blade. The gripping device 76 is lowered towards a top surface 75 of the preform 73 until a first gripping member 86a engages the top surface 75 of the preform 73; see Fig. 10b. the gripping device is further lowered until a second gripping member 86c engages the preform top surface 75; Fig. 10c. Meanwhile, the gripping arm 78a carrying the first, already engaged gripping member 86a is moved upwards relative to the base frame as upward movement of the gripping arms relative to the base frame 62 is allowed. The gripping arms of the gripping device 76 are thus pushed upwards relative to the base frame 62 by the engaged preform top surface during the step of lowering the gripping device.

In Fig. 10d, also the last gripping member (needle gripper) 86 has engaged the top surface 75 of the preform 73, while the other two gripping arms 78a, 78c have moved further upwards relative to the base frame 62. Subsequently, as seen in Fig. 10e, the gripping device is raised with the engaged preform for transporting and arranging the engaged preform 73 within a wind turbine blade mould (not shown). Downward movement of the gripping arms 78a-c relative to the base frame 62 is prevented by the lock members. The upward direction U and the downward direction D are indicated in Fig. 10e. Thus, as seen in Figs. 10 a-e, the positions of the gripping arms 78a-c relative to the base frame 62 is set by the top surface geometry of the preform.

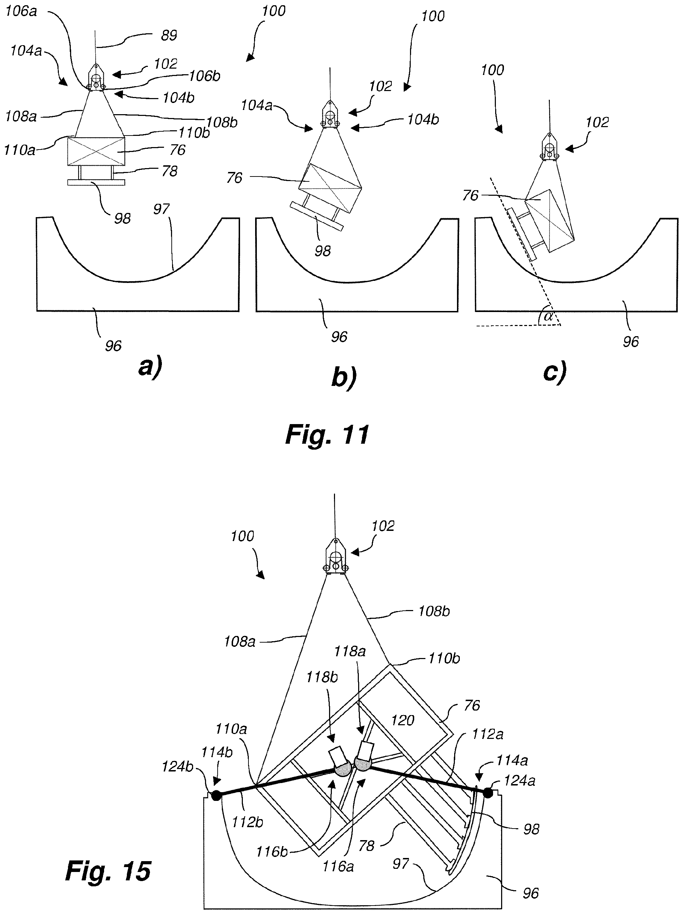

Fig. 11 is a schematic side view of a moulding assembly. The moulding assembly 100 comprises a blade mould 96 for moulding the shell part, usually a shell half, such as an upwind shell half or a downwind shell half of the blade. The blade mould 96 comprises a moulding cavity 97 in which preforms, fibre layers, or balsa wood can be arranged, typically followed by resin infusion in a VARTM process. The moulding assembly 100 further comprises a gripping device 76, such as a needle gripper, preferably the gripping device illustrated in the preceding figures. The gripping device 76 is operable for releasably engaging a preform 98 for the shell part. The moulding assembly 100 also comprises a lifting device 102, such as a chain hoist, preferably a dual chain hoist, the lifting device comprising a first hoisting device 104a and a second hoisting device 104b, and usually a holder, such as an upper hook which can be suspended from scaffolding, a gantry or a crane (not shown), for example by using strap 89. The lifting device may also comprise a chain hoist housing with a lifting motor that drives a chain sprocket over which the chain moves. Each of the first and second hoisting devices may take the form of a chain hoist, usually comprising a load chain and a lifting chain wheel. Each of the first and second hoisting devices comprises a respective load engaging member 110a, 110b for connecting the first and the second hoisting devices 104a, 104b to the gripping device. The load engaging members are usually arranged at the respective free ends of the load chain and can, for example, take the form of respective lower hook which can engage the gripping device.

The gripping device 76 is connected to the lifting device 102 at the respective load engaging members 110a, 110b, such as lower hooks, of the first and second hoisting devices 104a, 104b, such that the load engaging members 110a, 110b are spaced apart from another. Thus, by using two hoisting devices 104a, 104b, the gripping device and the engaged preform can be tilted for accurate placement in the root region of the blade mould. Fig 11c also illustrates angle α between a plane of the engaged preform, or a tangent to the curved lower surface of the preform, and the ground surface. It is preferred that the first hoisting device 104a is independently operable from the second hoisting device 104b. Also, as seen in Figs. 11, the respective load engaging members 110a, 110b of the first and second hoisting devices 104a, 104b are connected at opposing ends of the gripping device 76, for enabling a high degree of tilting.

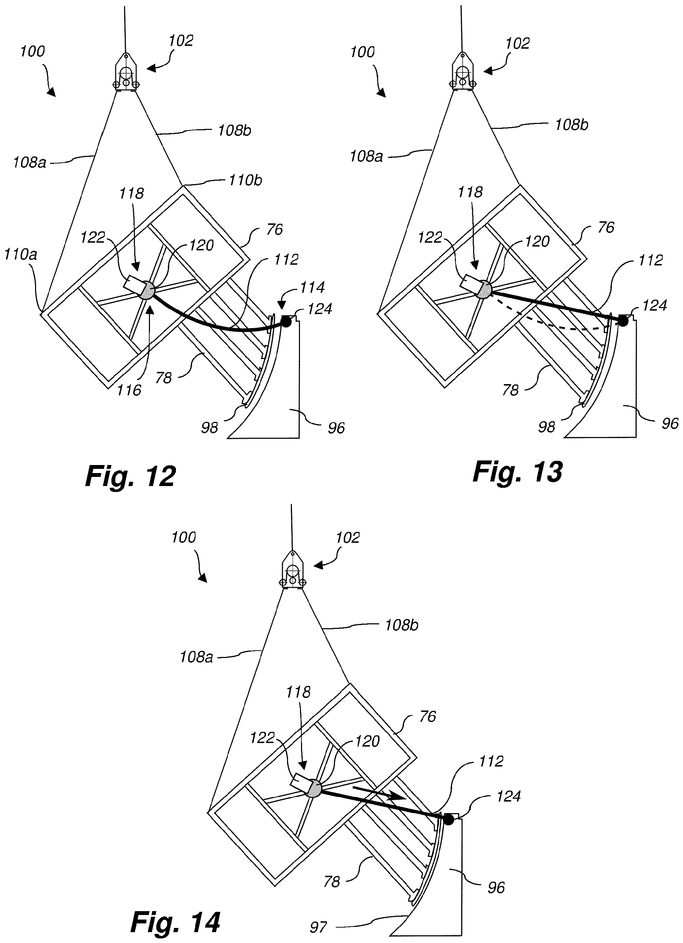

Fig. 12 is a schematic side view of a moulding assembly 100 according to the present invention, seen in a first position. The moulding assembly 100 comprises a tensionable member 112, such as strap, with a proximal end 114 and an opposing distal end 116. The proximal end 114 of the strap is releasably attached to the blade mould 96, for example via attachment eye 124. When the gripping device 76 is further away from the blade mould, for example, prior to a preform lowering step, the proximal end 114 of the strap 112 may be free, i.e. detached from the blade mould.

The distal end 116 of the tensionable member 112 is coupled to the gripping device, in the illustrated embodiment via tensioning unit 118, which is mounted on the gripping device in the illustrated embodiment. The tensioning unit 118 may comprise a winding mechanism 120 engaged to the strap 112 for creating and maintaining tension on the strap. The winding mechanism may be coupled to a motor 122, such as an electric motor, for operating the winding mechanism. In addition, it is preferred that the tensioning unit comprises a ratcheting mechanism to maintain tension on the strap 112.

The method of manufacturing a shell part of a wind turbine blade using the moulding assembly according to the present invention is illustrated in the sequence of Figs. 12-14. The engaged preform is arranged within the moulding cavity 97 of the blade mould by moving the gripping device 76 and the engaged preform by means of the lifting device 102, wherein the proximal end of the strap 112 is attached to the blade mould 96 as seen in Fig. 12. Subsequently, tension is created on the strap 112 by using the tensioning unit 118, i.e. the strap 122 is brought from a slack state (dashed line in Fig. 13) to a taut state as seen in Fig. 13. In addition, the gripping device 76 and thus the attached preform 98 can be further pulled towards the moulding cavity 97 using the strap and the tensioning unit 118; see arrow in Fig. 14. Subsequently, the preform can be disengaged from the gripping device 76, thus releasing the preform into the moulding cavity 97.

The step of arranging the engaged preform within the moulding cavity 97 of the blade mould may also include tilting the gripping device by means of the lifting device 102 comprising the first hoisting device and the second hoisting device. After preform disengagement, resin may be infused into the blade mould followed by curing and/or hardening the resin in order to form the blade part.

Fig. 15 shows a moulding assembly according to another embodiment of the present invention, wherein the moulding assembly comprises two tensionable members 112a, 112b, each having a proximal end 114a, 114b, and an opposing distal end 116a, 116b. The proximal end 114a of the first tensionable member 112a is releasably attached to the blade mould 96 at a first end of the blade mould, such as a leading edge end or edge of the blade mould. The proximal end 114b of the second tensionable member 112b is releasably attached to the blade mould 96 at an opposing second end of the blade mould, such as a trailing edge end or edge of the blade mould. The respective distal ends 116a, 116b of the tensionable member are each coupled to the gripping device via respective tensioning units 118a, 118b which are engaged to the respective tensionable members 112a, 112b for creating and maintaining tension on the tensionable members. Thus, the step of arranging the engaged preform 98 within the moulding cavity may comprise attaching the proximal end 114a, 114b of each tensionable member to opposing ends or edges, at attachment points 124a, 124b of the blade mould, and subsequently creating tension on both tensionable members by using the tensioning units 118a, 118b. Such embodiments can be used to further minimize undesired movement or rotation of the gripping device and the engaged preform during placement.

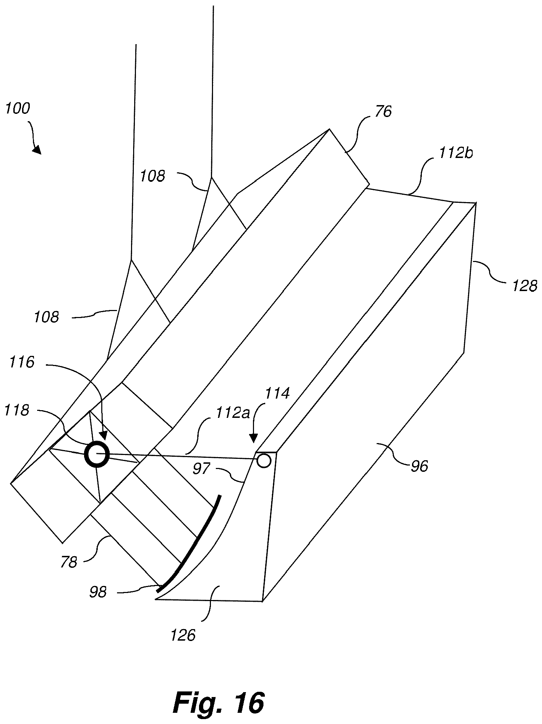

Another embodiment of the moulding assembly 100 of the present invention is illustrated in Fig. 16. The moulding assembly 100 comprises two tensionable members 112a, 112b, each with a proximal end 114 and an opposing distal end 116, wherein the proximal end 114 of the first tensionable member 112a is releasably attached to the blade mould at a root end 126 of the blade mould. The proximal end of the second tensionable member 112b is releasably attached to the blade mould at a tip end 128 of the blade mould. The respective distal ends of the tensionable members 112a, 112b are coupled to the gripping device 76 at opposing ends of the gripping device. Respective tensioning units 118 are engaged to the respective tensionable members 112a, 112b for creating and maintaining tension on the respective tensionable members (not seen for tensioning member 112b).

The invention is not limited to the embodiments described herein and may be modified or adapted without departing from the scope of the present invention.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: base frame
- 64: vertical beams
- 66: horizontal beams, longitudinal direction
- 68: horizontal beams, transverse direction
- 70: sheath member
- 71: preform mould
- 72: angled support member
- 73: preform
- 74: pivot connector
- 75: top surface of preform
- 76: gripping device
- 77: socket member
- 78: gripping arm
- 79: pole member
- 80: transverse support members
- 82: proximal end of gripping arm
- 84: distal end of gripping arm
- 86: gripping member
- 88: connection member
- 89: strap
- 90: lock member
- 91: slot
- 92: fixture
- 94: fibre material
- 96: blade mould
- 97: moulding cavity
- 98: preform
- 100: moulding assembly
- 102: lifting device
- 104: hoisting device
- 106: wheel
- 108: load chain
- 110: load engaging member
- 112: tensionable member
- 114: proximal end of tensionable member
- 116: distal end of tensionable member
- 118: tensioning unit
- 120: winding mechanism
- 122: motor
- 124: attachment point
- 126: root end of blade mould
- 128: tip end of blade mould
- *c*: chord length
- *dₜ*: position of maximum thickness
- *d_{f}*: position of maximum camber
- *dₚ*: position of maximum pressure side camber
- *f*: camber
- *L*: blade length
- La: length of rigid arm
- *r*: local radius, radial distance from blade root
- *t*: thickness
- Δ*y*: prebend

## Claims

1. A moulding assembly (100) for manufacturing a shell part of a wind turbine blade, the moulding assembly (100) comprising
a blade mould (96) for moulding the shell part, the blade mould comprising a moulding cavity (97),
a gripping device (76) for releasably engaging a preform (98) for the shell part,
a lifting device (102), wherein the gripping device (76) is connected to the lifting device (102),
a tensionable member (112) with a proximal end (114) and an opposing distal end (116), the proximal end (114) of the tensionable member being releasably attachable to the blade mould (96), and the distal end (116) of the tensionable member (112) being coupled to the gripping device, and
a tensioning unit (118) engaged to the tensionable member for creating and maintaining tension on the tensionable member.

2. A moulding assembly (100) according to claim 1, wherein the tensionable member is a cable, a strap or a rope.

3. A moulding assembly (100) according to claims 1 or 2, wherein the tensioning unit (118) comprises a winding mechanism (120).

4. A moulding assembly (100) according to claim 3, wherein the tensioning unit comprises a motor (122), such as an electric motor, coupled to said winding mechanism.

5. A moulding assembly (100) according to any of the preceding claims, wherein the tensioning unit comprises a ratcheting mechanism to maintain tension on the tensionable member.

6. A moulding assembly (100) according to any of the preceding claims, wherein the proximal end (114) of the tensionable member comprises an attachment device, such as a hook, for attachment to an edge of the blade mould.

7. A moulding assembly (100) according to any of the preceding claims, wherein the tensioning unit is mounted on the gripping device, and wherein the distal end (116) of the tensionable member (112) is coupled to the gripping device via the tensioning unit.

8. A moulding assembly (100) according to any of the preceding claims, wherein the lifting device (102) comprises a first hoisting device (104a) and a second hoisting device (104b), each of the first and second hoisting devices comprising a respective load engaging member (110a, 110b) for connecting the first and the second hoisting devices (104a, 104b) to the gripping device (76), and wherein the gripping device (76) is connected to the lifting device (102) at the respective load engaging members (110a, 110b) of the first and second hoisting devices (104a, 104b), such that the load engaging members (110a, 110b) are spaced apart from another

9. A moulding assembly (100) according to any of the preceding claims, wherein the first hoisting device (104a) is independently operable from the second hoisting device (104b).

10. A moulding assembly (100) according to any of the preceding claims, wherein the first hoisting device (104a) and/or the second hoisting device (104b) comprises a chain hoist with a load chain (108a, 108b), the respective load engaging member (110a, 110b) being located at the free end of the load chain (108a, 108b).

11. A moulding assembly (100) according to any of the preceding claims, wherein the gripping device (76) comprises
a base frame (62),
a plurality of gripping arms (78) slidably mounted on the base frame (62), each gripping arm (78) having a proximal end and a distal end,
a plurality of gripping members (86) for gripping a top surface (75) of the preform, each gripping member (86) being attached to the distal end of at least one of the gripping arms (78),
a plurality of lock members (90), each lock member being engaged with at least one of the gripping arms (78) for allowing sliding motion of the gripping arm (78) relative to the base frame (62) in a first direction while preventing sliding motion of the gripping arm (78) relative to the base frame (62) in a second direction.

12. A method of manufacturing a shell part of a wind turbine blade using the moulding assembly (100) according to any of claims 1-11, the method comprising
engaging a preform (98) for the shell part with the gripping device (76),
arranging the engaged preform within the moulding cavity (97) of the blade mould by moving the gripping device (76) and the engaged preform by means of the lifting device (102), and
disengaging the preform from the gripping device
wherein the step of arranging the engaged preform within the moulding cavity comprises attaching the proximal end of the tensionable member (112) to the blade mould (96), and subsequently creating tension on the tensionable member by using the tensioning unit.

13. A method according to claim 12, wherein the step of arranging the engaged preform within the moulding cavity (97) of the blade mould further includes pulling the gripping device (76) and the engaged preform (98) towards the moulding cavity (97) using the tensionable member (112).

14. A method according to any of claims 12 or 13, wherein the preform is manufactured in a preform mould (71), prior to engaging the preform (98) with the gripping device (76), wherein the method further comprises a step of transferring the engaged preform to the blade mould using the lifting device (102) and the connected gripping device (76), prior to arranging the engaged preform within the moulding cavity (97) of the blade mould.

15. A method according to any of claims 12-14, further comprising the steps of
- infusing resin into the blade mould after disengaging the preform from the gripping device (76), and
- curing or hardening the resin in order to form the blade part.

## Patentansprüche

1. Ausformungsanordnung (100) zum Herstellen eines Ummantelungsteils eines Windkraftanlagenblatts, wobei die Ausformungsanordnung (100) Folgendes umfasst:
eine Blattgussform (96) zum Ausformen des Ummantelungsteils, wobei die Blattgussform einen Gussformhohlraum (97) umfasst,
eine Greifvorrichtung (76) zum lösbaren In-Eingriff-Nehmen einer Vorform (98) für das Ummantelungsteil,
eine Hebevorrichtung (102), wobei die Greifvorrichtung (76) mit der Hebevorrichtung (102) verbunden ist,
ein spannbares Element (112) mit einem nahen Ende (114) und einem gegenüberliegenden fernen Ende (116), wobei das nahe Ende (114) des spannbaren Elements lösbar an der Blattgussform (96) angebracht werden kann und das ferner Ende (116) des spannbaren Elements (112) mit der Greifvorrichtung gekoppelt ist, und
eine Spanneinheit (118), die mit dem spannbaren Element in Eingriff steht, um eine Spannung an dem spannbaren Element zu erzeugen und aufrechtzuerhalten.

2. Ausformungsanordnung (100) nach Anspruch 1, wobei das spannbare Element ein Kabel, ein Gurt oder ein Seil ist.

3. Ausformungsanordnung (100) nach Anspruch 1 oder 2, wobei die Spanneinheit (118) einen Windenmechanismus (120) umfasst.

4. Ausformungsanordnung (100) nach Anspruch 3, wobei die Spanneinheit einen Motor (122) umfasst, wie beispielsweise einen Elektromotor, der mit dem Windenmechanismus gekoppelt ist.

5. Ausformungsanordnung (100) nach einem der vorhergehenden Ansprüche, wobei die Spanneinheit einen Ratschenmechanismus umfasst, um die Spannung an dem spannbaren Element aufrechtzuerhalten.

6. Ausformungsanordnung (100) nach einem der vorhergehenden Ansprüche, wobei das nahe Ende (114) des spannbaren Elements eine Anbringungsvorrichtung, wie beispielsweise einen Haken, zum Anbringen an einem Rand der Blattgussform umfasst.

7. Ausformungsanordnung (100) nach einem der vorhergehenden Ansprüche, wobei die Spanneinheit an die Greifvorrichtung montiert ist und wobei das ferner Ende (116) des spannbaren Elements (112) mittels der Spanneinheit mit der Greifvorrichtung gekoppelt ist.

8. Ausformungsanordnung (100) nach einem der vorhergehenden Ansprüche, wobei die Hebevorrichtung (102) eine erste Hebezugvorrichtung (104a) und eine zweite Hebezugvorrichtung (104b) umfasst, wobei die erste und die zweite Hebezugvorrichtung jeweils ein entsprechendes Lasteingriffselement (110a, 110b) zum Verbinden der ersten und der zweiten Hebezugvorrichtung (104a, 104b) mit der Greifvorrichtung (76) umfassen und wobei die Greifvorrichtung (76) an den jeweiligen Lasteingriffselementen (110a, 110b) der ersten und der zweiten Hebezugvorrichtung (104a, 104b) derart mit der Hebevorrichtung (102) verbunden ist, dass die Lasteingriffselemente (110a, 110b) voneinander beabstandet sind.

9. Ausformungsanordnung (100) nach einem der vorhergehenden Ansprüche, wobei die erste Hebezugvorrichtung (104a) unabhängig von der zweiten Hebezugvorrichtung (104b) betreibbar ist.

10. Ausformungsanordnung (100) nach einem der vorhergehenden Ansprüche, wobei die erste Hebezugvorrichtung (104a) und/oder die zweite Hebezugvorrichtung (104b) einen Kettenzug mit einer Lastkette (108a, 108b) umfassen, wobei das jeweilige Lasteingriffselement (110a, 110b) an dem freien Ende der Lastkette (108a, 108b) angeordnet ist.

11. Ausformungsanordnung (100) nach einem der vorhergehenden Ansprüche, wobei die Greifvorrichtung (76) Folgendes umfasst:
ein Grundgestell (62),
mehrere Greifarme (78), die gleitfähig an dem Grundgestell (62) montiert sind, wobei jeder Greifarm (78) ein nahes Ende und ein fernes Ende aufweist,
mehrere Greifelemente (86) zum Ergreifen einer Oberseite (75) der Vorform, wobei jedes Greifelement (86) an dem fernen Ende mindestens eines der Greifarme (78) angebracht ist,
mehrere Arretierungselemente (90), wobei jedes Arretierungselement mit mindestens einem der Greifarme (78) in Eingriff steht, um eine Gleitbewegung des Greifarms (78) relativ zu dem Grundgestell (62) in einer ersten Richtung zu ermöglichen, während eine Gleitbewegung des Greifarms (78) relativ zu dem Grundgestell (62) in einer zweiten Richtung verhindert wird.

12. Verfahren zum Herstellen eines Ummantelungsteils eines Windkraftanlagenblatts unter Verwendung der Ausformungsanordnung (100) nach einem der Ansprüche 1 bis 11, wobei das Verfahren Folgendes umfasst:
In-Eingriff-Nehmen einer Vorform (98) für das Ummantelungsteil mit der Greifvorrichtung (76),
Anordnen der in Eingriff genommenen Vorform in dem Gussformhohlraum (97) der Blattgussform durch Bewegen der Greifvorrichtung (76) und der in Eingriff genommenen Vorform mittels der Hebevorrichtung (102) und
Lösen der Vorform von der Greifvorrichtung,
wobei der Schritt des Anordnens der in Eingriff genommenen Vorform in dem Gussformhohlraum das Anbringen des nahen Endes des spannbaren Elements (112) an der Blattgussform (96) und das nachfolgende Erzeugen von Spannung an dem spannbaren Element unter Verwendung der Spanneinheit umfasst.

13. Verfahren nach Anspruch 12, wobei der Schritt des Anordnens der in Eingriff genommenen Vorform in dem Gussformhohlraum (97) der Blattgussform ferner das Ziehen der Greifvorrichtung (76) und der in Eingriff genommenen Vorform (98) hin zu dem Gussformhohlraum (97) unter Verwendung des spannbaren Elements (112) umfasst.

14. Verfahren nach Anspruch 12 oder 13, wobei die Vorform in einer Vorformform (71) hergestellt wird, bevor die Vorform (98) mit der Greifvorrichtung (76) in Eingriff genommen wird, wobei das Verfahren ferner einen Schritt des Überführens der in Eingriff genommenen Vorform zu der Blattgussform unter Verwendung der Hebevorrichtung (102) und der damit verbundenen Greifvorrichtung (76), bevor die in Eingriff genommene Vorform in dem Gussformhohlraum (97) der Blattgussform angeordnet wird, umfasst.

15. Verfahren nach einem der Ansprüche 12 bis 14, ferner umfassend die folgenden Schritte:
Eingießen von Harz in die Blattgussform nach dem Lösen der Vorform von der Greifvorrichtung (76) und
Aushärten oder Härten des Harzes, um das Blattteil zu bilden.

## Revendications

1. Ensemble de moulage (100) servant à fabriquer une partie formant coque d'une pale d'éolienne, l'ensemble de moulage (100) comportant
un moule de pale (96) servant au moulage de la partie formant coque, le moule de pale comportant une cavité de moulage (97),
un dispositif de préhension (76) servant à la mise en prise libérable d'une préforme (98) pour la partie formant coque,
un dispositif de levage (102), dans lequel le dispositif de préhension (76) est relié au dispositif de levage (102),
un élément en mesure d'être tendu (112) ayant une extrémité proximale (114) et une extrémité distale opposée (116), l'extrémité proximale (114) de l'élément en mesure d'être tendu pouvant être fixée de manière libérable au moule de pale (96), et l'extrémité distale (116) de l'élément en mesure d'être tendu (112) étant accouplée au dispositif de préhension, et
une unité de mise sous tension (118) mise en prise avec l'élément en mesure d'être tendu pour créer et maintenir la tension sur l'élément en mesure d'être tendu.

2. Ensemble de moulage (100) selon la revendication 1, dans lequel l'élément en mesure d'être tendu est un câble, une sangle ou une corde.

3. Ensemble de moulage (100) selon la revendication 1 ou la revendication 2, dans lequel l'unité de mise sous tension (118) comporte un mécanisme d'enroulement (120).

4. Ensemble de moulage (100) selon la revendication 3, dans lequel l'unité de mise sous tension comporte un moteur (122), tel qu'un moteur électrique, accouplé audit mécanisme d'enroulement.

5. Ensemble de moulage (100) selon l'une quelconque des revendications précédentes, dans lequel l'unité de mise sous tension comporte un mécanisme à cliquet servant à maintenir la tension sur l'élément en mesure d'être tendu.

6. Ensemble de moulage (100) selon l'une quelconque des revendications précédentes, dans lequel l'extrémité proximale (114) de l'élément en mesure d'être tendu comporte un dispositif de fixation, tel qu'un crochet, pour la fixation sur un bord du moule de pale.

7. Ensemble de moulage (100) selon l'une quelconque des revendications précédentes, dans lequel l'unité de mise sous tension est montée sur le dispositif de préhension, et dans lequel l'extrémité distale (116) de l'élément en mesure d'être tendu (112) est accouplée au dispositif de préhension par le biais de l'unité de mise sous tension.

8. Ensemble de moulage (100) selon l'une quelconque des revendications précédentes, dans lequel le dispositif de levage (102) comporte un premier dispositif de hissage (104a) et un deuxième dispositif de hissage (104b), chacun des premier et deuxième dispositifs de hissage comportant un élément respectif de mise en prise de charge (1 10a, 1 10b) pour relier les premier et deuxième dispositifs de hissage (104a, 104b) au dispositif de préhension (76), et dans lequel le dispositif de préhension (76) est relié au dispositif de levage (102) au niveau des éléments de mise en prise de charge respectifs (110a, 110b) des premier et deuxième dispositifs de hissage (104a, 104b), de telle sorte que les éléments de mise en prise de charge (110a, 1 10b) sont espacés les uns des autres.

9. Ensemble de moulage (100) selon l'une quelconque des revendications précédentes, dans lequel le premier dispositif de hissage (104a) peut être actionné indépendamment du deuxième dispositif de hissage (104b).

10. Ensemble de moulage (100) selon l'une quelconque des revendications précédentes, dans lequel le premier dispositif de hissage (104a) et/ou le deuxième dispositif de hissage (104b) comporte un palan à chaîne avec une chaîne de charge (108a, 108b), l'élément respectif de mise en prise de charge (110a, 110b) étant situé au niveau de l'extrémité libre de la chaîne de charge (108a, 108b).

11. Ensemble de moulage (100) selon l'une quelconque des revendications précédentes, dans lequel le dispositif de préhension (76) comporte
un cadre de base (62),
une pluralité de bras de préhension (78) montés de manière coulissante sur le cadre de base (62), chaque bras de préhension (78) ayant une extrémité proximale et une extrémité distale,
une pluralité d'éléments de préhension (86) servant à saisir une surface supérieure (75) de la préforme, chaque élément de préhension (86) étant fixé sur l'extrémité distale d'au moins l'un des bras de préhension (78),
une pluralité d'éléments de verrouillage (90), chaque élément de verrouillage étant en prise avec au moins l'un des bras de préhension (78) afin de permettre un mouvement coulissant du bras de préhension (78) par rapport au cadre de base (62) dans une première direction tout en empêchant le mouvement coulissant du bras de préhension (78) par rapport au cadre de base (62) dans une deuxième direction.

12. Procédé servant à fabriquer une partie formant coque d'une pale d'éolienne en utilisant l'ensemble de moulage (100) selon l'une quelconque des revendications 1 à 11, le procédé comportant les étapes consistant à
effectuer une mise en prise d'une préforme (98) pour la partie formant coque avec le dispositif de préhension (76),
agencer la préforme mise en prise à l'intérieur de la cavité de moulage (97) du moule de pale en déplaçant le dispositif de préhension (76) et la préforme mise en prise au moyen du dispositif de levage (102), et
séparer la préforme du dispositif de préhension
dans lequel l'étape consistant à agencer la préforme mise en prise à l'intérieur de la cavité de moulage comporte les étapes consistant à fixer l'extrémité proximale de l'élément en mesure d'être tendu (112) au moule de pale (96), et à ensuite créer une tension sur l'élément en mesure d'être tendu au moyen de l'unité de mise sous tension.

13. Procédé selon la revendication 12, dans lequel l'étape consistant à agencer la préforme mise en prise à l'intérieur de la cavité de moulage (97) du moule de pale comporte par ailleurs l'étape consistant à tirer le dispositif de préhension (76) et la préforme mise en prise (98) vers la cavité de moulage (97) en utilisant l'élément en mesure d'être tendu (112).

14. Procédé selon l'une quelconque des revendications 12 ou 13, dans lequel la préforme est fabriquée dans un moule de préforme (71), avant d'effectuer la mise en prise de la préforme (98) avec le dispositif de préhension (76), dans lequel le procédé comporte par ailleurs une étape consistant à transférer la préforme mise en prise jusqu'au moule de pale au moyen du dispositif de levage (102) et du dispositif de préhension relié (76), avant d'agencer la préforme mise en prise à l'intérieur de la cavité de moulage (97) du moule de pale.

15. Procédé selon l'une quelconque des revendications 12 à 14, comportant par ailleurs les étapes consistant à
- infuser de la résine dans le moule de pale après avoir séparé la préforme du dispositif de préhension (76), et
- faire sécher ou durcir la résine afin de former la partie formant pale.
